# FASCICULE DE BREVET EUROPEEN

(11) **EP 3 777 129 B1**
(45) Date de publication et mention de la délivrance du brevet: **12.10.2022**
(21) Numéro de dépôt: 19712233.6
(22) Date de dépôt: 27.03.2019
(51) Int. Cl.: H04N 5/374, H04N 5/372, H04N 9/04

(54) **CAPTEUR D'IMAGES AEROPORTE REALISANT DES PRISES DE VUE MATRICIELLE PAR DECALAGE TEMPOREL ET SOMMATION MULTI-SPECTRALES**
LUFTBILDSENSOR ZUR AUFNAHME VON MATRIXBILDERN DURCH ZEITLICHE VERSCHIEBUNG UND MULTISPEKTRALE SUMMATION
AIRBORNE IMAGE SENSOR TAKING MATRIX PICTURES BY TEMPORAL SHIFTING AND MULTI-SPECTRAL SUMMATION

(30) Priorité: 29.03.2018 FR 1800259
(43) Date de publication de la demande: 17.02.2021
(73) Titulaire: THALES, 92400 Courbevoie (FR)
(72) Inventeur: BLANC, Jean-François, 06150 Cannes-la-Bocca (FR); ISRABIAN, Claude, 06150 Cannes-la-Bocca (FR); CHAMBON, Thomas, 06150 Cannes-la-Bocca (FR)
(74) Mandataire: Atout PI Laplace
(86) Numéro de dépôt international: PCT/EP2019/057711
(87) Numéro de publication internationale: WO 2019/185707

(56) Documents cités:
- EP-A1- 2 150 039
- DE-A1- 3 819 828
- US-A1- 2003 006 364
- US-A1- 2016 014 360

## Description

L'invention concerne les imageurs comprenant des détecteurs matriciels.

Lors de la prise de vue, les instruments aéroportés ou spatiaux utilisent généralement des détecteurs linéaires fonctionnant en « peigne » (ou « Push Broom » en anglais). Ces détecteurs acquièrent une image ligne par ligne. Avantageusement, des détecteurs linéaires à décalage temporel et sommation (« Time Delay Integration », TDI) sont utilisés pour améliorer le rapport signal à bruit.

Les détecteurs Push Broom ont des domaines d'application particuliers. Leur développement est donc souvent spécifique et coûteux. Il est donc intéressant de s'intéresser aux capteurs matriciels qui sont plus génériques. Ces capteurs offrent également l'intérêt de produire des images « rigides », les lignes de la matrice étant acquises au même instant. Cette particularité donne l'avantage de produire des images dont la géométrie est bien maîtrisée, ce qui facilite de nombreuses applications.

Afin d'obtenir une image de haute résolution en couleurs d'une scène à observer, il est possible de fusionner une image panchromatique et une image multi-spectrale. L'image panchromatique et l'image multi-spectrale sont acquises à des résolutions pouvant être différentes, avec typiquement un facteur 4 entre le pas du pixel sol de l'image multi-spectrale et le pas du pixel sol de l'image panchromatique (C. Latry et al., « Restoration technique for Pleiades-HR panchromatic images », Proc. Arch. Photogramm. Remote Sens., 39 : 555-560, 2012). La fusion des images est par exemple réalisée par un traitement au sol de fusion des images.

Pour des capteurs matriciels, l'image en couleurs de la scène à observer est classiquement réalisée par échantillonnage spatial de trois couleurs : rouge, bleu et vert (RBG) grâce à un filtre. Le filtre de Bayer (US 1976/3971065) et le filtre Sparce CFA (ON Semiconductor, « Sparse Color Filter Pattern Overview », Notice d'information AND9180/D) sont généralement utilisés. Le filtre Bayer est présent sur la plupart des caméras couleurs du commerce. Le filtre Sparse CFA est une variante du filtre Bayer assurant un meilleur rendu des images sombres.

Les capteurs équipés de filtre de Bayer ou de filtre Sparse CFA sont utilisés sur des satellites d'observation à bas coût, car le capteur est intégré à une caméra commerciale, dite caméra sur étagère (ou « off the shell » en anglais). Ils permettent de réaliser des prises de vue instantanées (Snapshot) en deux dimensions en bloquant le mouvement du satellite lors de l'acquisition des images. Néanmoins, avec ces filtres, il est nécessaire d'effectuer une étape de démosaïcage ou dématriçage pour créer une image colorée pour chaque bande spectrale (bleue, verte, rouge et éventuellement panchromatique) transmise par le filtre. De plus, la résolution effective des images dépend de la bande spectrale considérée.

Par ailleurs, la plupart des images prises par satellites comprennent des parasites (aliasing en anglais), et le démosaïcage donne des résultats peu satisfaisants dans ce cas. De plus, dans le cas de satellites haute résolution réalisant un grand nombre d'images, il est nécessaire de comprimer ces images. L'algorithme de démosaïcage est donc implanté à bord, ce qui demande des ressources de calculs supplémentaires. Le volume d'images acquises est alors plus important, car il comprend trois couleurs par pixel alors qu'une solution classique comprend un pixel panchromatique et la couleur sur des pixels multi-spectraux quatre fois plus grands. De plus, le filtre Bayer est limité à trois couleurs, ce qui ne satisfait pas toujours les besoins des missions d'observation spatiale qui peuvent nécessiter plus de trois bandes spectrales.

La demande de brevet US 2003/0006364 divulgue un capteur CMOS comprenant un filtre multi-spectral présentant plusieurs couleurs de filtrage permettant d'acquérir des images en couleurs.

Le document DE 3819828 divulgue un arrangement optique particulier comprenant un prisme pour abouter deux capteurs d'images.

Le document EP 2150039 divulgue une méthode d'imagerie d'objets en mouvement l'un par rapport à l'autre.

L'invention vise à surmonter les inconvénients et limitations précités de l'art antérieur. Plus précisément, elle vise à proposer un capteur d'images comprenant des matrices de détection par décalage temporel et sommation, permettant des prises de vue matricielles continues TDI, et un filtre multi-spectral comprenant plusieurs éléments de filtrage, ne nécessitant pas de traitement de démosaïcage à bord et permettant d'accéder à plus de trois bandes spectrales transmises par les éléments de filtrage.

Un objet de l'invention est donc un capteur d'images apte à être embarqué dans un porteur se déplaçant au-dessus d'une scène à observer, ledit capteur comprenant :
- Au moins une matrice de détection d'images par décalage temporel pour sommation, alignée selon la direction de déplacement dudit porteur ; et
- Un circuit de traitement des signaux ayant au moins une entrée reliée à une sortie de données de ladite matrice de détection d'images ;

dans lequel ladite ou chaque matrice de détection d'images comprend N > 1 lignes et MC > 1 colonnes de pixels photosensibles, les lignes étant parallèles entre elles et perpendiculaires aux colonnes et à la direction de déplacement dudit porteur, et ladite ou chaque matrice de détection étant configurée pour fournir audit circuit de traitement des données d'images générées par les N lignes et MC colonnes de pixels de ladite ou chaque matrice de détection correspondant à des régions de ladite scène à observer, et ledit circuit de traitement étant configuré pour acquérir des images à des instants successifs, dits instants d'acquisition, et fournir à sa sortie, pour chaque instant d'acquisition d'une image d'une région de la scène à observer dudit capteur d'images, une matrice de données d'images possédant au plus N+1-Lint lignes, les lignes de ladite matrice de données d'images étant obtenues par sommation de données d'images générées par Lint lignes de pixels de ladite ou chaque matrice de détection, Lint étant un nombre entier inférieur ou égal à N et supérieur ou égal à 2.
caractérisé en ce qu'un filtre multi-spectral est placé devant ladite ou chaque matrice de détection, ledit filtre comprenant plusieurs éléments de filtrage agencés en lignes et colonnes, et choisis parmi une pluralité de types d'éléments de filtrage caractérisés par des bandes spectrales de transmission respectives, et chaque colonne de ladite matrice de détection comprenant au moins un élément de filtrage de chaque type d'élément de filtrage présent sur tout le filtre multi-spectral.

Selon des modes de réalisation particuliers de l'invention :
- les lignes d'éléments de filtrage du filtre sont agencées en une pluralité de bandeaux parallèles, les éléments de filtrage d'un même bandeau filtrant au moins trois lignes de pixels de ladite matrice de détection, plus particulièrement les éléments de filtrage d'un même bandeau ont la même bande spectrale de transmission, et plus particulièrement la bande spectrale de transmission des éléments de filtrage d'un même bandeau est différente des bandes spectrales de transmission des éléments de filtrage des autres bandeaux ;
- dans le cas où les éléments présentent la même bande spectrale de transmission au sein d'un même bandeau, le circuit de traitement est configuré pour effectuer une lecture couplée de plusieurs pixels appartenant à une même colonne de ladite matrice de détection et/ou une lecture couplée de plusieurs pixels appartenant à une même ligne de ladite matrice de détection ; et
- des éléments de filtrage dudit filtre ont une bande spectrale de transmission panchromatique.
Selon un autre mode de réalisation de l'invention, les éléments de filtrage dudit filtre sont agencés de manière à former un même motif de filtrage, dit sous-motif, reproduit périodiquement sur les lignes et colonnes du filtre, et plus particulièrement le circuit de traitement est configuré pour sommer lesdits vecteurs de données d'images fournis par ladite matrice de détection de manière à acquérir alternativement une image multi-spectrale et une image panchromatique de ladite scène à observer, et encore plus particulièrement le circuit de traitement est configuré pour sommer les données d'images générées par les pixels d'une même colonne de ladite ou chaque matrice de détection afin d'obtenir une image panchromatique à pleine résolution de ladite scène à observer.

Selon un autre mode de réalisation de l'invention, le capteur d'images comprend un prisme réfléchissant placé entre deux matrices de détection dans le sens du déplacement dudit porteur de manière à ce que les deux matrices de détection soient aboutées le long des lignes desdites matrices de détection ; plus particulièrement il comprend au moins une troisième matrice de détection qui est placée entre ledit prisme réfléchissant et une des deux premières matrices de détection dans le sens de déplacement dudit porteur, cette troisième matrice étant placée en hauteur sous ledit prisme, de manière à augmenter le nombre de bandes spectrales filtrées par lesdits filtres multi-spectraux placés devant chacune des matrices de détection ; et encore plus particulièrement il comprend au moins une lame dichroïque placée entre ledit prisme réfléchissant et ladite troisième matrice de détection dans le sens de déplacement du porteur de manière à minimiser le champ optique dudit capteur.

Selon un autre mode de réalisation de l'invention, le circuit de traitement des signaux est un circuit numérique programmable.

L'invention porte également sur un instrument optique spatial ou aéroporté d'acquisition d'images, comprenant un capteur d'images selon un mode de réalisation de l'invention.

D'autres caractéristiques, détails et avantages de l'invention ressortiront à la lecture de la description faite en référence aux figures annexées données à titre d'exemple et qui représentent, respectivement :
- La figure 1, le principe de fonctionnement d'un capteur d'images équipé d'une matrice de détection par décalage temporel pour sommation selon l'art antérieur ;
- La figure 2, le principe de fonctionnement d'un capteur d'images selon un premier mode de réalisation de l'invention ;
- La figure 3, le principe de fonctionnement d'un capteur d'images selon un second mode de réalisation de l'invention ;
- Les figure 4a et 4b, un capteur d'images selon un troisième mode de réalisation de l'invention ;
- Les figures 5a et 5b, un capteur d'images selon un quatrième mode de réalisation de l'invention ;
- Les figures 6a et 6b, un capteur d'images selon un cinquième mode de réalisation de l'invention ; et
- La figure 7, une représentation schématique d'un vaisseau spatial portant un instrument optique d'acquisition d'images équipé d'un capteur d'images selon un mode de réalisation de l'invention.

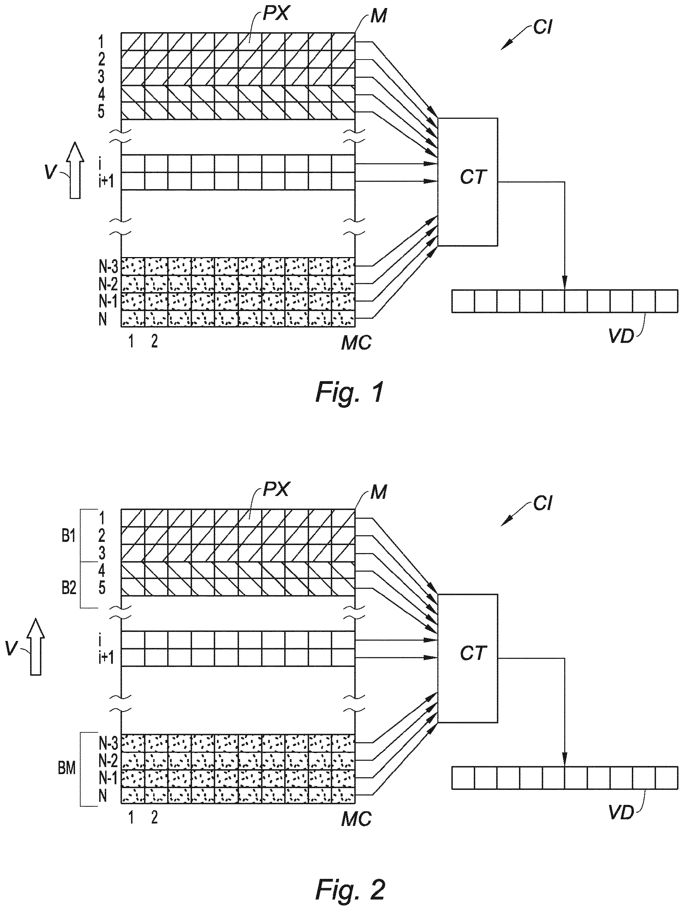

La figure 1 illustre le principe de fonctionnement, selon l'art antérieur (US 2016/9357145), d'un capteur matriciel d'images CI comprenant une zone matricielle de détection par décalage temporel pour sommation de lignes, cette zone matricielle comprend au moins une matrice de détection M. La zone matricielle de détection comprend des pixels PX, agencés par lignes et par colonnes. Les charges générées par ces pixels sont accumulées dans la matrice de détection M. Sur la figure, les lignes sont numérotées de 1 à N et les colonnes sont numérotées de 1 à MC. Le porteur dans lequel ce capteur CI est embarqué se déplace avec une vitesse V dans la direction perpendiculaire aux lignes. Par conséquent, l'image de la scène à observer, formée sur la zone matricielle de détection M par un système optique non représenté, défile dans la même direction, avec l'orientation opposée à V. Ainsi la ligne de pixels de rang i+1 voit, à un instant tᵢ₊₁, la même distribution d'intensité lumineuse vue par la ligne i à un instant précédent tᵢ = tᵢ₊₁ - Δt, correspondant à une même ligne d'une image optique de la scène à observer. L'intervalle Δt dépend à la fois de la résolution spatiale recherchée (fonction du grossissement du système optique et de la taille des pixels) et de la vitesse de déplacement V du porteur par rapport au sol. Un circuit électronique de traitement CT additionne les signaux générés par les différentes lignes de pixels PX de la matrice M et correspondant à une même ligne de l'image. En d'autres termes, il additionne les signaux d'une même scène générés par les pixels PX de la ligne de rang 1 à l'instant t₁, à ceux de la ligne de rang 2 à l'instant t₂, etc ... et à ceux de la ligne de rang i à l'instant tᵢ. A sa sortie, le circuit CT fournit des vecteurs de données d'images VD, chacun étant représentatif d'une ligne de l'image optique, intégrée sur un temps égal à Nᵢₙₜ × Δt, Nᵢₙₜ étant le nombre de lignes additionnées pour obtenir une ligne de l'image optique. Cette sommation des signaux permet d'augmenter le rapport signal à bruit des données d'images acquises par le capteur. Les vecteurs VD forment une matrice de données d'images ayant N-Nᵢₙₜ lignes permettant d'obtenir une image optique de la scène à observer.

La figure 2 illustre le principe de fonctionnement d'un capteur d'images selon un premier mode de réalisation de l'invention. Un filtre multi-spectral comprenant plusieurs éléments de filtrage est placé devant la matrice de détection M. Les éléments de filtrage sont agencés sous forme de lignes et colonnes correspondant aux lignes et colonnes de pixels de la matrice de détection M. Ils sont choisis parmi une pluralité de types d'éléments de filtrage caractérisés par des bandes spectrales de transmission respectives dont l'union détermine éventuellement une bande spectrale panchromatique du filtre. Chaque colonne du filtre multi-spectral comprend une alternance d'éléments de filtrage de types différents, tels que l'union de leurs bandes spectrales de transmission détermine ladite bande panchromatique du filtre. Les éléments de filtrage peuvent être agencés en bandeaux horizontaux parallèles B1, B2, ..., BM. Les bandeaux comprennent au moins deux lignes d'éléments de filtrage, ce qui correspond à une hauteur minimale de trois pixels. Les éléments de filtrage peuvent par exemple être configurés de manière à avoir plusieurs bandes spectrales de transmission au sein d'un même bandeau ou de manière à avoir la même bande spectrale de transmission au sein d'un même bandeau. Le circuit de traitement CT fournira en sortie une matrice de données MD comprenant au plus N+1-Lint lignes, où Lint est le nombre de sommations effectuées durant l'acquisition d'une image, Lint étant un nombre entier inférieur ou égal à N et supérieur ou égal à 2.

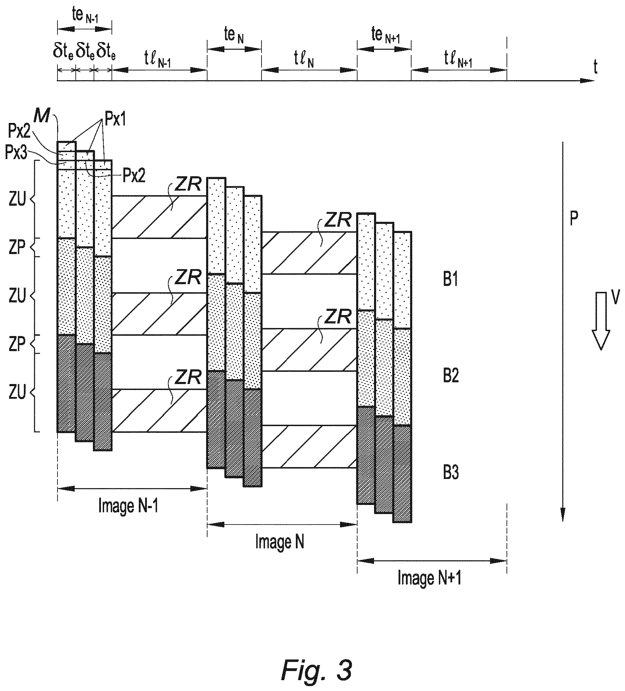

La figure 3 illustre plus précisément le principe de fonctionnement d'un capteur d'images selon un second mode de réalisation de l'invention. Seule la matrice de détection M est représentée sur cette figure. Pour des raisons de simplicité, seule une colonne de la matrice M est représentée, mais le principe s'applique pour chaque colonne de pixels de la matrice. Dans ce mode de réalisation, les éléments de filtrage du filtre sont agencés en trois bandeaux B1, B2 et B3 horizontaux et parallèles. Les éléments de filtrage d'un même bandeau ont la même bande spectrale de transmission, qui est différente des autres bandes spectrales de transmission des éléments de filtrage présents sur les autres bandeaux. Lors de l'acquisition de l'image, par exemple l'image K-1, deux étapes distinctes ont lieu : la phase d'exposition durant un temps d'exposition te_{K-1} et la phase de lecture de la matrice M durant un temps de lecture tl_{K-1}. Une période d'acquisition ta a donc la durée de la phase d'exposition te et de la phase de lecture tl. Durant la phase d'exposition, la scène à observer défile, selon le sens de défilement P, sur le capteur qui se déplace avec une vitesse V. Cette phase d'exposition est divisée en plusieurs expositions élémentaires d'une durée δte. La durée δte correspond au défilement de la scène à observer sur un pixel. De manière synchrone, au terme de chaque exposition élémentaire, le signal détecté sur chaque pixel est mémorisé puis ajouté électroniquement, après décalage temporel, aux signaux générés par d'autres pixels, sur la même scène à des instants différents. Par exemple, à la première exposition élémentaire pour l'image K-1, le pixel PX3 détecte un signal qui est additionné par le circuit de traitement CT au signal détecté par le pixel PX2 à la deuxième exposition élémentaire, puis la somme est additionnée par le circuit CT au signal détecté par le pixel PX1 à la troisième exposition élémentaire. Il en est de même pour tous les pixels constituant la matrice de détection M. Sur la figure, seules trois expositions élémentaires sont représentées, mais il est possible d'en réaliser un plus grand nombre. Le nombre d'exposition élémentaire correspond au nombre de sommation d'un signal détecté sur un pixel donné de la scène à observer. Le nombre typique de sommations, Lint, est de 20. Pour une image, seules les lignes de la scène à observer ayant été intégrées autant de fois qu'il y a eu d'exposition élémentaires sont considérées comme utiles. Elles constituent alors une zone utile ZU. Cette zone utile est délimitée par la première et la dernière ligne de pixels d'un même bandeau ayant été intégrées autant de fois que le nombre d'expositions élémentaires, et constitue une matrice de données, ayant un nombre de lignes maximal égal à N+1-Lint, où N est le nombre de lignes de pixels de la matrice de détection et Lint est le nombre d'expositions élémentaires faites durant l'acquisition, cette matrice de données étant fournie en sortie du circuit de traitement pour cet instant d'acquisition. On a donc des zones perdues ZP aux limites de chaque bandeau, dans lesquelles les lignes n'ont pas été intégrées suffisamment avec le même filtrage. Les hauteurs des zones utiles ZU dépendent de la taille de la matrice de détection M, du nombre de bandeaux et de la hauteur des zones perdues ZP. Afin de ne pas perdre d'information sur l'image de la scène à observer, plusieurs images de la scène sont acquises : image K-1, image K, image K+1, ... de manière à avoir une zone de recouvrement ZR entre deux images successives. Les images K-1, K, K+1, etc ... sont des images obtenues à partir des matrices de données fournies à la sortie du circuit de traitement et ayant au plus N+1-Lint lignes, Lint étant le nombre d'expositions élémentaires pour un instant d'acquisition, c'est-à-dire le nombre de sommations effectuées durant un instant d'acquisition. La zone de recouvrement ZR dépend de la fréquence image, c'est-à-dire du déplacement relatif de la matrice entre une image K et une image K+1 selon la direction horizontale représentant le temps t (soit pendant une période image te + tl), du ralenti du porteur, c'est-à-dire du déplacement relatif de la matrice entre les images K et K+1 selon la direction verticale représentant le défilement P, et des hauteurs des zones utiles ZU. Dans ce mode de réalisation, il y a autant de bandes spectrales de transmission qu'il y a de bandeaux.

Selon un autre mode de réalisation de l'invention, le filtre comprend avantageusement un bandeau dont les éléments de filtrage ont une bande spectrale de transmission panchromatique.

Selon un autre mode de réalisation de l'invention, le filtre multi-spectral est agencé sur plusieurs matrices de détection.

Selon un autre mode de réalisation de l'invention, le circuit de traitement CT est configuré pour réaliser une lecture couplée des pixels (« binning » en anglais) appartenant à une même colonne, dits pixels verticaux. Cette lecture couplée est effectuée sur les pixels présentant un filtrage multi-spectral, c'est-à-dire un filtrage non-panchromatique. Il est également possible de configurer le circuit de traitement CT pour réaliser une lecture couplée des pixels appartenant à une même ligne, dits pixels horizontaux, présentant un filtrage multi-spectral pour réduire le débit vidéo. Comme les éléments de filtrage multi-spectral sont plus étroits que les éléments de filtrage panchromatique, typiquement d'un facteur 4, la lecture couplée des pixels horizontaux et verticaux permet d'équilibrer le rapport signal à bruit des voies panchromatique et multi-spectrales, et ainsi réduire le nombre de données à stocker. De plus, cela permet un gain sur la fréquence de lecture des lignes de la matrice M, ainsi que sur le débit vidéo.

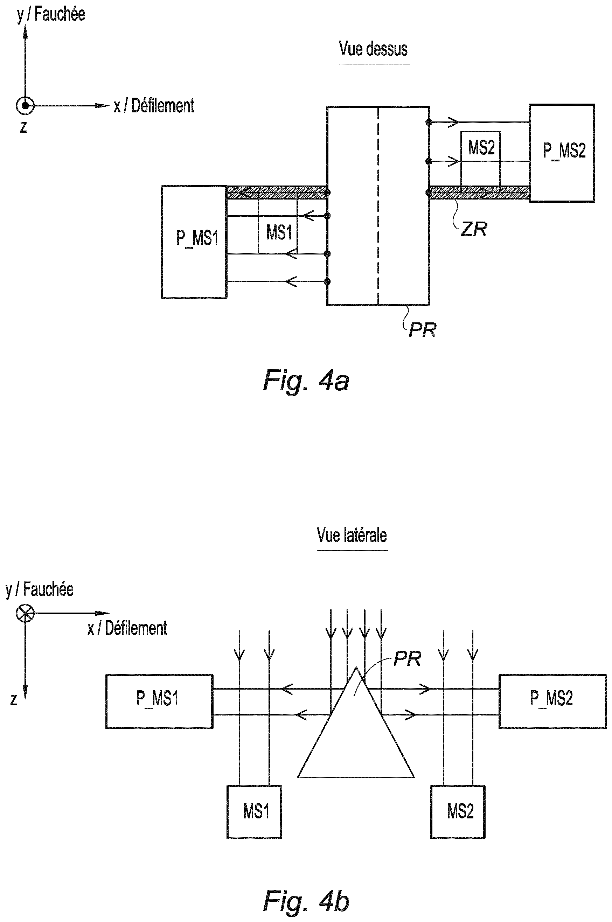

Afin de réaliser une ligne de détection, comprenant plusieurs matrices de détection, ne présentant pas de trous, les matrices sont aboutées. Néanmoins, en raison des dimensions des boitiers contenant les matrices de détection, l'aboutement en quinconce habituellement réalisé pour les détecteurs linéaires n'est pas toujours réalisable, car les boitiers peuvent se toucher et cet aboutement peut conduire à accroître significativement le champ de l'optique de focalisation. Les figures 4a à 5b présentent plusieurs modes de réalisation de l'invention pour abouter les matrices de détection et ainsi aménager le plan focal de l'instrument optique comprenant un capteur d'images selon l'invention.

Les figures 4a et 4b présentent un premier aménagement du plan focal. Deux matrices P_MS1 et P_MS2 sont face à face dans le sens de défilement du porteur, et décalées dans la direction de la fauchée (largeur de la prise de vue). La matrice P_MS1 « voit » seulement une partie de la matrice P_MS2, cette partie correspondant à la zone ZR2 de la figure. Cette zone est dite zone de recouvrement. Un prisme réfléchissant PR est placé entre les deux matrices dans le sens de défilement, il permet ainsi un aboutement des deux matrices P_MS1 et P_MS2 dans la direction de la fauchée, c'est-à-dire le long des lignes des matrices de détection. Le champ dans le sens de défilement du porteur est ainsi minimisé et cela permet l'aboutement des matrices dans les champs suivant la vitesse de défilement (champs ALT, « A Long Track ») ou dans les champs perpendiculairement à la vitesse de défilement (ACT, « A Cross Track »).

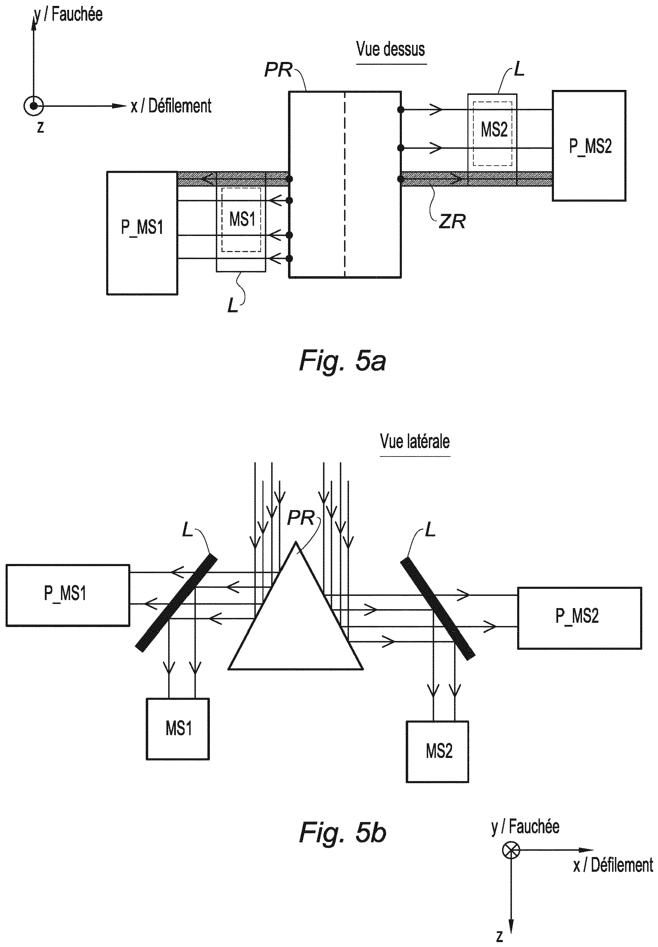

Afin d'accroître le nombre de bandes spectrales transmises, il est possible de dédoubler les matrices P_MS1 et P_MS2 en deux caméras MS1 et MS2, placées de part et d'autre du prisme PR dans le sens du défilement, MS1 (respectivement MS2) étant entre le prisme PR et la matrice P_MS1 (respectivement P_MS2). La matrice MS1 (respectivement MS2) est placée au même niveau que la matrice P_MS1 (respectivement P_MS2) dans le sens de la fauchée et sous le prisme PR selon l'axe z. Cette solution présente cependant un inconvénient, car elle suppose que le porteur (instrument optique) a un champ optique large. Afin de minimiser ce champ optique, il est possible de placer une lame dichroïque L entre la caméra P_MS1 et MS1 et/ou entre la caméra P_MS2 et MS2 (figures 5a et 5b).

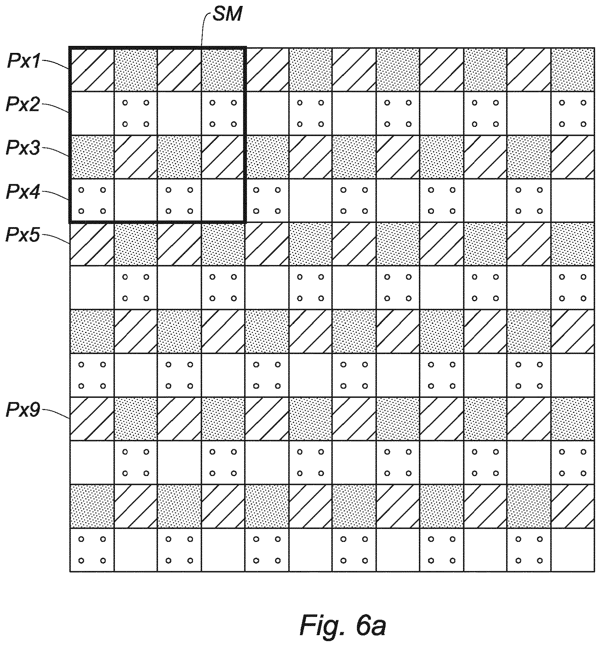

La figure 6a présente un cinquième mode de réalisation de l'invention, dans lequel les éléments de filtrage du filtre sont agencés de manière à avoir un motif de filtrage régulier et périodique sur les lignes et colonnes du filtre, ce motif étant dit sous-motif SM. Le sous-motif comprend une alternance d'éléments de filtrage de types différents, tels que l'union de leurs bandes spectrales de transmission détermine une bande spectrale panchromatique du filtre. Avantageusement, les bandes spectrales de transmission des éléments de filtrage du sous-motif sont complémentaires dans le spectre. Par exemple, avec un sous-motif SM de taille 4 pixels par 4 pixels, comme présenté sur la figure 5, l'élément de filtrage pour le pixel 1 PX1 est dédié à la bande spectrale du bleu, celui du pixel 2 PX2 est dédié à la bande du vert, celui du pixel 3 PX3 à celle du rouge et celui du pixel 4 PX4 au proche infra-rouge.

Le circuit de traitement CT est alors configuré pour intégrer les signaux des pixels de manière à produire successivement une image multi-spectrale et une image panchromatique. L'image panchromatique est produite en sommant, sur une même colonne, tous les signaux des pixels appartenant à plusieurs sous-motifs complets, tandis que l'image multi-spectrale est produite en sommant, sur une même colonne, les signaux des pixels modulo la largeur du sous-motif. Par exemple, pour un sous-motif de largeur 4 pixels, l'image panchromatique sera obtenue en sommant sur une même colonne les signaux générés par les pixels PX1, PX2, PX3 et PX4, alors que l'image multi-spectrale sera obtenue en sommant sur une même colonne les signaux générés par les pixels PX1, PX5, PX9, etc .... On obtient alors alternativement des images panchromatiques à pleine résolution, ainsi que des images multi-spectrales sous-échantillonnées selon le sous-motif du filtre multi-spectral. L'alternance des images panchromatiques et multi-spectrales, associée au recouvrement entre deux images consécutives selon la fréquence d'acquisition du capteur et le défilement du porteur permet d'acquérir l'ensemble de la scène à observer dans tous les canaux spectraux.

La production d'une image en bande panchromatique à pleine résolution et de qualité optimale permet d'utiliser des algorithmes de type PAN-sharpening (C. Latry et al., « Restoration technique for Pleiades-HR panchromatic images », Proc. Int. Arch. Photogramm. Remote Sens., 39 : 555-560, 2012) pour générer des images colorées de pleine résolution. La pleine résolution correspond à la résolution de la matrice de détection M seule, c'est-à-dire la résolution de matrice M sans tenir compte du filtre multi-spectral placé devant cette matrice. Le nombre de sommations réalisées pour l'effet « TDI » est donc dépendant de la largeur du sous-motif.

La présence d'un sous-motif de filtrage sur le filtre permet d'avoir un motif de filtrage régulier sur toute la matrice de détection, d'avoir un nombre de bandes spectrales variables et de ne pas dédier une zone de la matrice à la bande spectrale panchromatique. En effet, la bande spectrale panchromatique permet de générer une image à pleine résolution de bonne qualité, mais elle n'est pas utile en tant que réel produit image. C'est donc une perte équivalente de zone utile au niveau du capteur d'images.

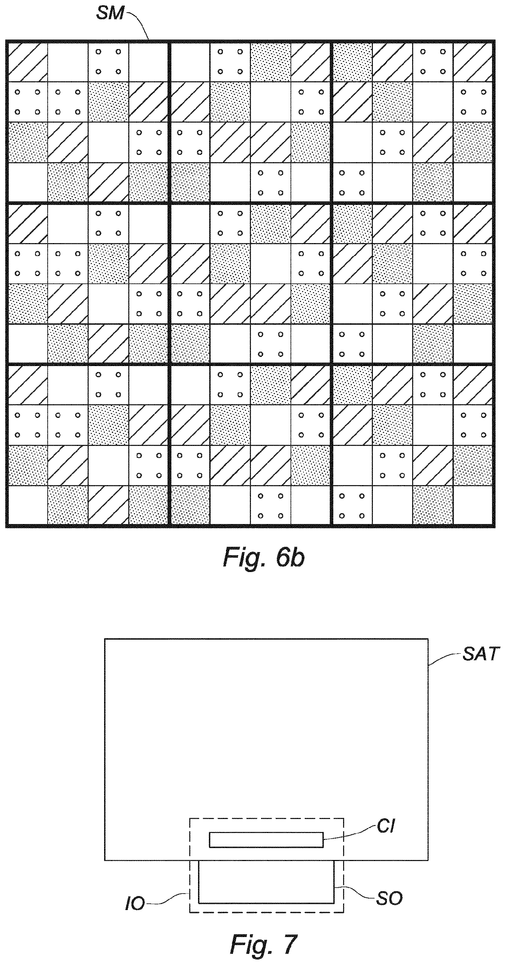

La périodicité du sous-motif sur les lignes et les colonnes de la matrice de détection M permet de réduire les effets de Moiré lors de la reconstruction de la scène à observer en couleurs. Néanmoins, il est possible d'avoir un sous-motif dans lequel les éléments de filtrage sont placés périodiquement uniquement le long des colonnes de la matrice de détection M (figure 6b). Cela permet de faciliter la sommation des signaux générés par les pixels au sein d'une même colonne.

Selon un autre mode de réalisation de l'invention, afin de réduire le nombre de données ou garder une bonne performance en rapport signal à bruit, il est possible de produire des images multi-spectrales sous-échantillonnées par sommation des sorties multi-spectrales.

Selon un autre mode de réalisation de l'invention, le circuit de traitement CT est un circuit numérique programmable.

La figure 7 illustre très schématiquement un porteur SAT, par exemple un vaisseau spatial, et plus particulièrement un satellite, équipé d'un instrument optique IO d'acquisition d'images. Cet instrument optique IO comprend un système optique conventionnel SO, par exemple un télescope, couplé à un capteur d'images CI selon un mode de réalisation de l'invention.

## Revendications

1. Capteur d'images (CI) configuré pour capturer une scène à observer lorsque ledit capteur se déplace linéairement par rapport à ladite scène selon une direction de déplacement p, ledit capteur comprenant :
- Au moins une matrice (M) de détection d'images par décalage temporel pour sommation ; et
- Un circuit de traitement des signaux (CT) ayant au moins une entrée reliée à une sortie de données de ladite matrice de détection d'images ;
dans lequel ladite ou chaque matrice de détection d'images comprend N > 1 lignes et MC > 1 colonnes de pixels (PX) photosensibles, les lignes étant parallèles entre elles et perpendiculaires aux colonnes et à la direction de déplacement, et ladite ou chaque matrice de détection étant configurée pour fournir audit circuit de traitement des données d'images générées par les N lignes et MC colonnes de pixels de ladite ou chaque matrice de détection correspondant à des régions de ladite scène à observer, et ledit circuit de traitement étant configuré pour acquérir des images à des périodes successives, dits périodes d'acquisition (ta) ,chaque période d'acquisition (ta) comprenant une phase d'exposition (te) composée d'une succession d'instants d'expositions élémentaires (δte), et fournir à sa sortie, pour chaque période d'acquisition (ta) d'une image d'une région de la scène à observer dudit capteur d'images, une matrice de données d'images (MD) possédant au plus N+1-Lint lignes, les lignes de ladite matrice de données d'images étant obtenues par sommation de données d'images générées par Lint lignes de pixels de ladite ou chaque matrice de détection, Lint étant le nombre d'instants d'expositions élémentaires (δte) durant une période l'acquisition (ta), Lint étant un nombre entier inférieur ou égal à N et supérieur ou égal à 2 ;
**caractérisé en ce qu'**un filtre multi-spectral est placé devant ladite ou chaque matrice de détection, ledit filtre comprenant plusieurs éléments de filtrage agencés en lignes et colonnes, et choisis parmi une pluralité de types d'éléments de filtrage **caractérisés par** des bandes spectrales de transmission respectives, et chaque colonne de ladite matrice de détection comprenant au moins un élément de filtrage de chaque type d'élément de filtrage présent sur tout le filtre multi-spectral.

2. Capteur d'images selon la revendication 1 dans lequel lesdites lignes d'éléments de filtrage du filtre sont agencées en une pluralité de bandeaux parallèles (B1, B2, BM), les éléments de filtrage d'un même bandeau filtrant au moins trois lignes de pixels de ladite matrice de détection.

3. Capteur d'images selon la revendication 2 dans lequel lesdits éléments de filtrage d'un même bandeau ont la même bande spectrale de transmission.

4. Capteur d'images selon la revendication 3 dans lequel la bande spectrale de transmission des éléments de filtrage d'un même bandeau est différente des bandes spectrales de transmission des éléments de filtrage des autres bandeaux.

5. Capteur d'images selon l'une des revendications 3 et 4 dans lequel ledit circuit de traitement est configuré pour effectuer une lecture couplée de plusieurs pixels appartenant à une même colonne de ladite matrice de détection.

6. Capteur d'images selon l'une des revendications 3 à 5 dans lequel ledit circuit de traitement est configuré pour effectuer une lecture couplée de plusieurs pixels appartenant à une même ligne de ladite matrice de détection.

7. Capteur d'images selon l'une des revendications précédentes dans lequel des éléments de filtrage dudit filtre ont une bande spectrale de transmission panchromatique.

8. Capteur d'images selon la revendication 1 dans lequel les éléments de filtrage dudit filtre sont agencés de manière à former un même motif de filtrage, dit sous-motif (SM), reproduit périodiquement sur les lignes et colonnes du filtre.

9. Capteur d'images selon la revendication 8 dans lequel ledit circuit de traitement est configuré pour sommer lesdits vecteurs de données d'images fournis par ladite matrice de détection de manière à acquérir alternativement une image multi-spectrale et une image panchromatique de ladite scène à observer.

10. Capteur d'images selon la revendication 9 dans lequel ledit circuit de traitement est configuré pour sommer les données d'images générées par les pixels d'une même colonne de ladite ou chaque matrice de détection afin d'obtenir une image panchromatique à pleine résolution de ladite scène à observer.

11. Capteur d'images selon l'une des revendications précédentes comprenant un prisme réfléchissant (PR) placé entre deux matrices de détection dans le sens du déplacement dudit porteur de manière à ce que les deux matrices de détection soient aboutées le long des lignes desdites matrices de détection.

12. Capteur d'images selon la revendication 11 dans lequel au moins une troisième matrice de détection est placée entre ledit prisme réfléchissant et une des deux premières matrices de détection dans le sens de déplacement dudit porteur, cette troisième matrice étant placée en hauteur sous ledit prisme, de manière à augmenter le nombre de bandes spectrales filtrées par lesdits filtres multi-spectraux placés devant chacune des matrices de détection.

13. Capteur d'images selon la revendication 12 dans lequel au moins une lame dichroïque (L) est placée entre ledit prisme réfléchissant et ladite troisième matrice de détection dans le sens de déplacement du porteur de manière à minimiser le champ optique dudit capteur.

14. Capteur d'images selon l'une des revendications précédentes dans lequel ledit circuit de traitement des signaux est un circuit numérique programmable.

15. Instrument optique spatial ou aéroporté d'acquisition d'images (IO), comprenant un capteur d'images selon l'une des revendications 1 à 14.

## Patentansprüche

1. Bildsensor (CI), konfiguriert zum Aufnehmen einer zu beobachtenden Szene, wenn sich der Sensor linear zu der Szene in einer Bewegungsrichtung p bewegt, wobei der Sensor Folgendes umfasst:
- mindestens eine Matrix (M) zur Bilderkennung durch Zeitverschiebung zur Summierung; und
- eine Signalverarbeitungsschaltung (CT) mit mindestens einem Eingang, der mit einem Datenausgang der Bilderkennungsmatrix verbunden ist;
wobei die oder jede Bilderkennungsmatrix N > 1 Reihen und MC > 1 Spalten von lichtempfindlichen Pixeln (PX) umfasst, wobei die Reihen parallel zueinander und lotrecht zu den Spalten und der Bewegungsrichtung sind, und wobei die oder jede Erkennungsmatrix so konfiguriert ist, dass sie die Verarbeitungsschaltung mit Bilddaten versorgt, die von den N Reihen und MC Spalten von Pixeln der oder jeder Erkennungsmatrix erzeugt werden, die Regionen der zu beobachtenden Szene entsprechen, und wobei die Verarbeitungsschaltung zum Aufnehmen von Bildern in aufeinanderfolgenden Perioden, Aufnahmeperioden (ta) genannt, konfiguriert ist, wobei jede Aufnahmeperiode (ta) eine Belichtungsphase (te) umfasst, die aus einer Folge von elementaren Belichtungszeitpunkten (δte) besteht, und an ihrem Ausgang für jede Aufnahmeperiode (ta) eines Bildes einer Region der zu beobachtenden Szene des Bildsensors eine Bilddatenmatrix (MD) liefert, die höchstens N+1-Lint Reihen besitzt, wobei die Reihen der Bilddatenmatrix durch Summieren von Bilddaten erhalten werden, die von Lint Pixelreihen der oder jeder Erkennungsmatrix erzeugt werden, wobei Lint die Anzahl der elementaren Belichtungszeitpunkte (δte) während einer Aufnahmeperiode (ta) ist und Lint eine ganze Zahl gleich oder kleiner als N und gleich oder größer als 2 ist;
**dadurch gekennzeichnet, dass** ein Multispektralfilter vor der oder jeder Erkennungsmatrix platziert ist, wobei das Filter mehrere in Reihen und Spalten angeordnete Filterelemente umfasst, die aus einer Vielzahl von Filterelementtypen ausgewählt sind, die durch jeweilige Transmissionsspektralbänder gekennzeichnet sind, und jede Spalte der Erkennungsmatrix mindestens ein Filterelement jedes über das gesamte Multispektralfilter vorhandenen Filterelementtyps umfasst.

2. Bildsensor nach Anspruch 1, wobei die Filterelementreihen des Filters in einer Vielzahl von parallelen Streifen (B1, B2, BM) angeordnet sind, wobei die Filterelemente eines selben Streifens mindestens drei Pixelreihen der Erkennungsmatrix filtern.

3. Bildsensor nach Anspruch 2, wobei die Filterelemente eines selben Streifens dasselbe Transmissionsspektralband haben.

4. Bildsensor nach Anspruch 3, wobei sich das Transmissionsspektralband der Filterelemente eines selben Streifens von den Transmissionsspektralbändern der Filterelemente der anderen Streifen unterscheidet.

5. Bildsensor nach einem der Ansprüche 3 und 4, wobei die Verarbeitungsschaltung zum Durchführen einer gekoppelten Auslesung mehrerer Pixel konfiguriert ist, die zu einer selben Spalte der Erkennungsmatrix gehören.

6. Bildsensor nach einem der Ansprüche 3 bis 5, wobei die Verarbeitungsschaltung zum gekoppelten Auslesen mehrerer Pixel konfiguriert ist, die zu einer selben Reihe der Erkennungsmatrix gehören.

7. Bildsensor nach einem der vorhergehenden Ansprüche, wobei die Filterelemente des Filters ein panchromatisches Transmissionsspektralband aufweisen.

8. Bildsensor nach Anspruch 1, wobei die Filterelemente des Filters zum Bilden eines selben Filtermusters, Submuster (SM) genannt, ausgelegt ist, das periodisch in den Reihen und Spalten des Filters reproduziert wird.

9. Bildsensor nach Anspruch 8, wobei die Verarbeitungsschaltung zum Summieren der von der Erkennungsmatrix gelieferten Bilddatenvektoren konfiguriert ist, um abwechselnd ein Multispektralbild und ein panchromatisches Bild der zu beobachtenden Szene aufzunehmen.

10. Bildsensor nach Anspruch 9, wobei die Verarbeitungsschaltung zum Summieren der von den Pixeln einer selben Spalte der oder jeder Erkennungsmatrix erzeugten Bilddaten konfiguriert ist, um ein panchromatisches Bild der zu beobachtenden Szene mit voller Auflösung zu erhalten.

11. Bildsensor nach einem der vorhergehenden Ansprüche, der ein reflektierendes Prisma (PR) umfasst, das zwischen zwei Erkennungsmatrizen in der Bewegungsrichtung des Trägers so angeordnet ist, dass die beiden Erkennungsmatrizen Ende-an-Ende entlang der Reihen der Erkennungsmatrizen aneinander liegen.

12. Bildsensor nach Anspruch 11, wobei mindestens eine dritte Erkennungsmatrix zwischen dem reflektierenden Prisma und einer der beiden ersten Erkennungsmatrizen in Bewegungsrichtung des Trägers angeordnet ist, wobei diese dritte Matrix höhenmäßig unter dem Prisma angeordnet ist, um die Anzahl der Spektralbänder zu erhöhen, die von den vor jeder der Erkennungsmatrizen angeordneten multispektralen Filtern platziert sind.

13. Bildsensor nach Anspruch 12, wobei mindestens eine dichroitische Lamelle (L) zwischen dem reflektierenden Prisma und der dritten Erkennungsmatrix in der Bewegungsrichtung des Trägers angeordnet ist, um das optische Feld des Sensors zu minimieren.

14. Bildsensor nach einem der vorhergehenden Ansprüche, wobei die Signalverarbeitungsschaltung eine programmierbare digitale Schaltung ist.

15. Weltraum- oder flugzeuggestütztes optisches Bildaufnahmeinstrument (10) mit einem Bildsensor nach einem der Ansprüche 1 bis 14.

## Claims

1. Image sensor (CI) configured to capture a scene to be observed, when said sensor moves linearly with respect to said scene according to a direction of movement p, said sensor comprising:
- at least one image detecting matrix (M) based on temporal shifting for summation; and
- a circuit for processing the signals (CT), having at least one input connected to a data output of said image detecting matrix;
wherein said or each image-detecting matrix comprises N > 1 rows and MC > 1 columns of photosensitive pixels (PX), the rows being parallel to one another and perpendicular to the columns and to the direction of movement, and said or each detecting matrix being configured to deliver, to said processing circuit, image data generated by the N rows and MC columns of pixels of said or each detecting matrix corresponding to regions of said scene to be observed, and said processing circuit being configured to acquire images at successive times, called acquisition times (ta), each acquisition time (ta) comprising an exposure phase (te) composed of a succession of elementary exposure instants (δte), and supplying at its output, for each acquisition time (ta) of an image of a region of the scene to be observed of said image sensor, an image data matrix (MD) possessing at most N+1-Lint rows, the rows of said image data matrix being obtained by summing image data generated by Lint rows of pixels of said or each detecting matrix, Lint being the number of elementary exposure instants (δte) during an acquisition time (ta), Lint being an integer number lower than or equal to N and higher than or equal to 2;
**characterised in that** a multi-spectral filter is placed in front of said or each detecting matrix, said filter comprising multiple filtering elements arranged in rows and columns, and chosen from a plurality of types of filtering elements **characterised by** respective transmission spectral bands, and each column of said detecting matrix comprising at least one filtering element of each type of filtering element present in the whole multi-spectral filter.

2. Image sensor according to Claim 1, wherein said rows of filtering elements of the filter are arranged in a plurality of parallel strips (B1, B2, BM), the filtering elements of a given strip filtering at least three rows of pixels of said detecting matrix.

3. Image sensor according to Claim 2, wherein said filtering elements of a given strip have the same transmission spectral band.

4. Image sensor according to Claim 3, wherein the transmission spectral band of the filtering elements of a given strip is different from the transmission spectral bands of the filtering elements of the other strips.

5. Image sensor according to one of Claims 3 and 4, wherein said processing circuit is configured to bin multiple pixels belonging to the same column of said detecting matrix.

6. Image sensor according to one of Claims 3 to 5, wherein said processing circuit is configured to bin multiple pixels belonging to the same row of said detecting matrix.

7. Image sensor according to one of the preceding claims, wherein the filtering elements of said filter have a panchromatic transmission spectral band.

8. Image sensor according to Claim 1, wherein the filtering elements of said filter are arranged so as to form a given filtering pattern, called the sub-pattern (SM), which is periodically reproduced in the rows and columns of the filter.

9. Image sensor according to Claim 8, wherein said processing circuit is configured to sum said image-data vectors delivered by said detecting matrix so as to alternatively acquire a multispectral image and a panchromatic image of said scene to be observed.

10. Image sensor according to Claim 9, wherein said processing circuit is configured to sum the image data generated by the pixels of a given column of said or each detecting matrix in order to obtain a full-resolution panchromatic image of said scene to be observed.

11. Image sensor according to one of the preceding claims, comprising a reflective prism (PR) placed between two detecting matrixes in the direction of the movement of said carrier so that the two detecting matrixes are end-to-end along the rows of said detecting matrixes.

12. Image sensor according to Claim 11, wherein at least one third detecting matrix is placed between said reflective prism and one of the two first detecting matrixes in the direction of movement of said carrier, this third matrix being placed heightwise under said prism, so as to increase the number of spectral bands filtered by said multi-spectral filters placed in front of each of the detecting matrixes.

13. Image sensor according to Claim 12, wherein at least one dichroic plate (L) is placed between said reflective prism and said third detecting matrix in the direction of movement of the carrier so as to minimise the optical field of said sensor.

14. Image sensor according to one of the preceding claims, wherein said signalprocessing circuit is a programmable digital circuit.

15. Spatial or airborne optical instrument (IO) for acquiring images, comprising an image sensor according to one of claims 1 to 14.
